# EUROPÄISCHE PATENTANMELDUNG

(11) **EP 2 428 400 A2**
(43) Veröffentlichungstag der Anmeldung: **14.03.2012**
(21) Anmeldenummer: 11180567.7
(22) Anmeldetag: 08.09.2011
(51) Int. Cl.: B60Q 1/30, B60Q 11/00, B60R 16/03

(54) **Fahrzeugbeleuchtungssystem mit einer Ausweichschaltung**

(30) Priorität: 09.09.2010 DE 102010044800
(71) Anmelder: BPW Bergische Achsen KG, 51674 Wiehl (DE)
(72) Erfinder: Kottmann, Ralf, 51491 Overath (DE)
(74) Vertreter: Christophersen, Ulrich Rudolf

(57) **Zusammenfassung**

Vorgeschlagen wird ein Fahrzeugbeleuchtungssystem (6) zur Versorgung und Ansteuerung der Fahrzeugrückleuchten, mit einer einen ersten Prozessor (CPU) (16) aufweisenden zentralen Lichtsteuereinheit (8), mindestens einer einen zweiten Prozessor (CPU) (22) aufweisenden, verbraucherseitigen Leuchtensteuereinheit (10), und einem diese beiden Steuereinheiten (16, 22) verbindenden Daten-BUS-System (12). Das Fahrzeugbeleuchtungssystem weist eine Ausweichschaltung zur Aufrechterhaltung eines Notbetriebs auf, und die Ausweichschaltung ist bei einer Fehlererkennung in dem ersten Prozessor (CPU) (16), in dem zweiten Prozessor (CPU) (22) und/oder in dem Daten-BUS-System (12) schaltbar.

## Beschreibung

Die Erfindung betrifft ein Fahrzeugbeleuchtungssystem zur Versorgung und Ansteuerung der Fahrzeugrückleuchten, mit einer einen ersten Prozessor (CPU) aufweisenden zentralen Lichtsteuerungseinheit, mindestens einer einen zweiten Prozessor (CPU) aufweisenden, verbraucherseitigen Leuchtensteuereinheit, und einem diese beiden Steuerungseinheiten verbindenden Daten-BUS-System.

Auf dem Fahrzeugsektor werden zunehmend LED-Signalleuchten eingesetzt, da diese neben verbesserten lichttechnischen Eigenschaften eine höhere Standzeit im Vergleich zu konventionellen Glühbirnen haben. Die Ansteuerung von LED-Leuchten erfolgt häufig nicht konventionell, d. h. unmittelbar durch Schließen eines vom Fahrer kommenden Stromkreises, sondern indirekt über eine Lichtsteuereinheit. Das vom Fahrer kommende Schaltsignal gelangt zunächst, ebenso wie etwaige andere Schaltsignale, zu der Lichtsteuereinheit, in der in Abhängigkeit vom jeweiligen Schaltsignal ein Steuersignal für die betreffende Rückleuchteneinheit in Gang gesetzt wird. Häufig erfolgt diese weitere Signalübertragung über ein Daten-BUS-System. Dieses erfordert zusätzliche elektronische Bausteine, wie beispielsweise Prozessoren und BUS-Anbindungen, welche die Zuverlässigkeit der Signalübertragung zu den Rückleuchten negativ beeinträchtigen können.

Die DE 10 2009 044 056 A1 beschreibt ein Fahrzeugbeleuchtungssystem, welches zum Schutz vor Ausfällen der Datenübertragung des Daten-BUS-Systems durch einzelne defekte BUS-Leitungen eine zusätzliche Ersatz-BUS-Leitung vorsieht.

Der Erfindung liegt die Aufgabe zugrunde, die Zuverlässigkeit einer mit einem Daten-BUS-System und mindestens zwei Prozessoren (CPU) für die am Fahrzeugheck angeordneten Rückleuchten arbeitende Fahrzeugbeleuchtungseinrichtung weiter zu erhöhen.

Zur Lösung dieser Aufgabe wird bei einem Fahrzeugbeleuchtungssystem mit den eingangs angegebenen Merkmalen vorgeschlagen, dass dieses eine Ausweichschaltung zur Aufrechterhaltung eines Notbetriebs aufweist, und dass die Ausweichschaltung bei einer Fehlererkennung in dem ersten Prozessor (CPU), in dem zweiten Prozessor (CPU) und/oder in dem Daten-BUS-System schaltbar ist.

Eine solche Vorrichtung zeichnet sich durch ein hohes Maß an Zuverlässigkeit bei der Spannungsversorgung der am Fahrzeugheck angeordneten Rückleuchten aus. Dieser Vorteil wird vor allem bei Einsatz des Fahrzeugbeleuchtungssystems in einem Fahrzeugverband aus einem angetriebenen Zugfahrzeug und einem gezogenen Anhängerfahrzeug erzielt. Erfindungsgemäß übernimmt die Ausweichschaltung im Fall eines Defekts oder eines Ausfalls des bidirektionalen Daten-BUS-Systems und/oder bei einem Fehler in einem der beteiligten Prozessoren die Funktion einer Notsignalschaltung, so dass die Spannungsversorgung aufrechterhalten bleibt und die Fahrzeugbeleuchtung in einem Notbetrieb ohne sicherheitsrelevante Einschränkung weiterfunktioniert.

Wird in der zentralen Lichtsteuereinheit ein Defekt oder ein Ausfall der bidirektionalen Daten-BUS-Verbindung und/oder ein Defekt des ersten und/oder des zweiten Prozessors diagnostiziert, schaltet die Lichtsteueranordnung zur Aufrechterhaltung eines Notbetriebs auf die Ausweichschaltung um. Die Signale, die üblicherweise, d. h. im Normalbetrieb, über den ersten Prozessor, das Daten-BUS-System und den zweiten Prozesssor verlaufen, folgen im Notberieb einem davon abweichenden Signalverlauf. Dies kann, muss aber nicht, mit einer gezielten Unterbrechung des üblichen Signalverlaufs einhergehen.

In einer vorteilhaften Ausführungsform umfasst das Fahrzeugbeleuchtungssystem eine erste Fehlererkennungseinheit in der Lichtsteuereinheit und eine zweite Fehlererkennungseinheit in der Leuchtensteuereinheit, welche derart ausgestaltet sind, dass durch diese Fehler in dem ersten Prozessor, dem zweiten Prozessor (CPU) und/oder dem Daten-BUS-System erkennbar und die Ausweichschaltung schaltbar ist. Die mit den Fehlererkennungseinheiten verbundenen Prozessoren können Defekte des Daten-BUS-Systems erkennen sowie das Vorliegen eines derartigen Defektes an die jeweilige Fehlererkennungseinheit weiterleiten. Die Fehlererkennungseinheiten können durch die jeweiligen direkten und indirekten Verbindungen Defekte, sowohl des Daten-BUS-Systems als auch der Prozessoren erkennen. Im Fall einer Fehlererkennung initiieren die Fehlererkennungseinheiten, dass die vom Fahrer kommenden Signale auf die Ausweichschaltung umgeleitet werden, und versetzen somit das Fahrzeugbeleuchtungssystem in den Notbetrieb.

Eine weitere Ausführungsform ist dadurch gekennzeichnet, dass diese zur Schaltung eines Notsignalverlaufs der Ausweichschaltung einen ersten Umschalter in der Lichtsteuereinheit und einen zweiten Umschalter in der Leuchtensteuereinheit umfasst. Die Fehlererkennungseinheiten sind mit den jeweiligen, im Signalverlauf angeordneten Umschaltern verbunden, und können im erkannten Fehlerfall, wie beschrieben, den Wechsel auf die Ausweichschaltung durch den Umschalter initiieren. Die vom Fahrer kommenden Signale für die jeweiligen Rückleuchten verlaufen somit im Fehlerfall nach einer derartigen Initiierung nicht entlang des üblichen Weges durch die Prozessoren und das Daten-BUS-System, sondern ab dem ersten Umschalter bis zum zweiten Umschalter auf einem Ersatzweg der Ausweichschaltung.

In einer bevorzugten Ausführungsform ist zur Übertragung des Notsignals der erste Umschalter mit einem ersten Ende mindestens einer zwischen den Steuereinheiten geführten Leitung und der zweite Umschalter mit einem zweiten Ende der mindestens einen zwischen den Steuereinheiten geführten Leitung verbunden. Dabei kann die eine oder es können die mehreren zwischen den Steuereinheiten verlaufenden Leitungen bereits im System vorhanden sein, oder die eine oder die mehreren zwischen den Steuereinheiten verlaufenden Leitungen sind eine speziell für den Notbetrieb vorgesehene Leitung bzw. speziell dafür vorgesehene Leitungen.

Alternativ ist in einer ebenso bevorzugten Ausführungsform zur Übertragung des Notsignals der erste Umschalter mit einem ersten Ende mindestens einer BUS-Leitung des Daten-BUS-Systems, und der zweite Umschalter mit einem zweiten Ende der mindestens einen BUS-Leitung des Daten-BUS-Systems verbunden. In diesem Fall führt der Signalverlauf der Ausweichschaltung nach der Abzweigung ab dem ersten Umschalter für den Bereich zwischen den Prozessoren zurück auf den üblichen Weg des Signalverlaufs, und nutzt eine einsatzfähige BUS-Leitung. Liegt im erkannten Fehlerfall der Defekt in den BUS-Leitungen, kann das Fahrzeugbeleuchtungssystem die Signale auf eine nicht betroffene, noch funktionsfähige BUS-Leitung des Daten-BUS-Systems legen. Im weiteren Signalverlauf, zweigt die Ausweichschaltung am zweiten Ende des Daten-BUS-Systems wieder von dem üblichen Weg ab und kann an dem zweiten Prozessor vorbei zu dem zweiten Umschalter verlaufen. Durch einen derartigen Signalverlauf der Ausweichschaltung im Notbetrieb kann auf bereits vorhandene Leitungen zurückgegriffen werden.

Von Vorteil ist, wenn der erste und der zweite Umschalter je eine Notsignalsteuerung umfassen. Mittels dieser Notsignalsteuerungen kann der erste Umschalter die vom Fahrer kommenden Signale in geeigneter Weise auf für die Ausweichschaltung verfügbare Leitungen verteilen. Durch die Notsignalsteuerung des zweiten Umschalters können die nun in der Ausweichschaltung verlaufenden Signale wieder den richtigen Verbrauchern, d. h. Rückleuchten, zugeordnet werden.

Für den Fall, dass die Ausweichschaltung über eine funktionsfähige BUS-Leitung des Daten-BUS-Systems erfolgt, umfasst die Notsignalsteuerung des ersten Umschalters einen Kodierer und die Notsignalsteuerung des zweiten Umschalters einen Dekodierer. Mittels des Kodierers kann die vom Fahrer kommende Information in geeigneter Weise zur Übertragung über zumindest eine Daten-BUS-Leitung kodiert werden. Wird mehr als ein Signal im Notbetrieb übertragen, werden die kodierten Signale auf eine definierte Weise, wie z. B. durch Summation, zur Übertragung zusammengeführt. Die kodierte Information wird im Dekodierer derart zurückgewandelt, dass sie den Verbrauchern in geeigneter Weise zugeführt werden kann. Sowohl Signalkodierung wie auch Signalzusammenführung können zeitinvariant als auch zeitvariant ausgeführt werden. In der Ausweichschaltung übernimmt somit der Kodierer Aufgaben des ersten Prozessors im Normalbetrieb und der Dekodierer Aufgaben des zweiten Prozessors im Normalbetrieb.

Weitere Vorteile und Einzelheiten ergeben sich auch aus der nachfolgenden Beschreibung, in der auf die zugehörige Zeichnung Bezug genommen wird. Darin zeigen:
- Fig. 1: in einer schematischen Darstellung eine erste Ausführungsform einer Fahrzeugbeleuchtungsanordnung mit einer Ausweichschaltung über zwischen Steuergeräten geführte Leitungen, und
- Fig. 2: in einer schematischen Darstellung eine zweite Ausführungsform einer Fahrzeugbeleuchtungsanordnung mit einer Ausweichschaltung über eine BUS-Leitung.

Dargestellt in den Figuren ist die lichttechnische elektrische Ausrüstung eines Nutzfahrzeuges, welches sich aus einem - angetriebenen - Zugfahrzeug Z und einem-gezogenen - Anhänger oder Sattelauflieger A zusammensetzt. Die elektrische Verbindung hinsichtlich Betriebsspannung und Signalspannung zwischen Anhängerfahrzeug A und Zugfahrzeug Z erfolgt über flexibel verlegte Anschlusskabel 2.1, 2.2, 2.3. Ein Fahrzeugbeleuchtungssystem 6 des Anhängerfahrzeugs A umfasst nahe der vorderen Bordwand 4 des Anhängerfahrzeugs A eine zentrale Lichtsteuereinheit 8, am anderen, d. h. rückwärtigen Ende des Anhängerfahrzeugs A eine Leuchtensteuereinheit 10 und ein diese beiden Steuereinheiten 8, 10 verbindendes Daten-BUS-System 12.

Üblicherweise befinden sich am rückwärtigen Ende des Anhängerfahrzeugs A eine linke und eine rechte Leuchtensteuereinheit 10, welche jeweils eine von zwei Rückleuchteneinheiten 14 steuert. Jede Rückleuchteneinheit 14 führt üblicherweise die Lichtfunktionen einer Bremsleuchte 14.1, einer jeweiligen Blinkerleuchte 14.2, des Rücklichts 14.3 und ggf. eines Rückfahrlichts, einer Nebelschlussleuchte oder Kennzeichenbeleuchtung aus. Auf den Zeichnungen ist nur eine der üblicherweise zwei vorhandenen Leuchtensteuereinheiten 10 und Rückleuchteneinheiten 14 dargestellt.

Die einzelnen Rückleuchten 14.1, 14.2, 14.3 können statt mit herkömmlichen Glühbirnen mit Leuchtdioden (LED) und entsprechenden Vorschaltwiderständen für die Leuchtdioden bestückt sein. Die Leuchtdioden sind dann nach Art einer Matrix geschaltet, bestehend aus parallelen LED-Reihen, die ihrerseits aus mehreren LED bestehen.

Die zentrale Lichtsteuereinheit 8 des Fahrzeuganhängers A nimmt einen ersten Prozessor (CPU) 16, einen diesem vorgeschalteten ersten Umschalter 18, eine sowohl mit dem Prozessor 16 als auch dem Umschalter 18 elektrisch verbundene erste Fehlererkennungseinheit 20 und eine in den Zeichnungen nicht dargestellte BUS-Anbindung auf.

Die zentrale Lichtsteuereinheit 8 kann über weitere Signalleitungen mit anderen Steuerkomponenten der Fahrzeugelektrik signaltechnisch verknüpft sein, z. B. mit einem elektronischen Bremsensteuergerät für die Bremsen des Fahrzeuganhängers.

Jede Leuchtensteuereinheit 10 nimmt einen zweiten Prozessor (CPU) 22, einen diesem vorgeschalteten zweiten Umschalter 24 und eine sowohl mit dem Prozessor 22 als auch dem Umschalter 24 elektrisch verbundene zweite Fehlererkennungseinheit 26 auf.

Die zentrale Lichtsteuereinheit 8 steht über eine oder mehrere als bidirektionaler Daten-Bus arbeitende Daten-BUS-Leitungen 28, 35 mit positivem Potential, und über einen das negative Potential aufweisenden Masseleiter in elektrischer Verbindung mit den Rückleuchteinheiten 14. Als Massepotential kann auch das aus Metall bestehende Fahrzeugchassis dienen.

Die BUS-Leitungen 28, 35 arbeiten mit Gleichspannung, vorzugsweise der Gleichspannung des 24-Volt-Bordnetzes des Zugfahrzeugs, wobei der Gleichspannung zur Übertragung von Informationen zusätzlich BUS-Signale aufmoduliert werden. Zu diesem Zweck beinhalten die Prozessoren 16, 22 BUS-Anbindungen zum Aufmodulieren bzw. Auslesen der BUS-Signale. Die Kontaktierung der Bus-Leitungen 28, 35 erfolgt vorzugsweise durch entsprechende Kontakte.

Wird im Zugfahrzeug Z durch den Fahrer z. B. der Blinker rechts betätigt, wird der entsprechende, über die Kabelverbindung 2.1, 2.2, 2.3 geführte Stromkreis geschlossen, und dies wird durch eine Signalauswertung der zentralen Lichtsteuereinheit 8 detektiert. Die Lichtsteuereinheit 8 initiiert daraufhin über das Daten-BUS-System 12 ein der Gleichspannung aufmoduliertes Signal zum Einschalten der LED des Blinklichts der betreffenden Rückleuchteneinheit 14. Der zweite Prozessor 22 empfängt das Signal und schaltet über integrierte Schaltelemente die LEDs des Blinklichts einzeln oder gruppenweise je nach Ausführung ein bzw. aus.

Anhängerfahrzeuge A mit einem Daten-BUS-System 12 zur Übermittlung der Rückleuchtensignale über die große Fahrzeuglänge von der nahe der vorderen Bordwand 4 angeordneten Lichtsteuereinheit 8 bis zu der am Fahrzeugheck angeordneten Leutchtensteuereinheiten 10 von häufig mehr als sechs Metern unterliegen einem erhöhten Ausfallrisiko. Verantwortlich dafür sind häufig die zusätzlich erforderlichen elektronischen Bauelemente, wie vor allem Prozessoren, BUS-Anbindungen und das Daten-BUS-System.

Erfindungsgemäß ist das Fahrzeugbeleuchtungssystem so ausgebildet, dass im Falle eines Defekts der Prozessoren 16, 22 und/oder des Daten-Bus-Systems 12, die vom Fahrer kommenden Signale entlang einer Ausweichschaltung geführt werden. Dies ermöglicht, den vom Defekt betroffenen Bereich zu umgehen bzw. zu überbrücken. Dies kann mittels des ersten und zweiten Umschalters 18, 24, geschehen, die den Prozessoren 16, 22 vor- bzw. nachgeschaltet sind. Im Falle eines Defektes erkennen die Fehlererkennungseinheiten 20, 26 den Fehler, und sie bewirken über die Umschalter 18, 24 ein Umschalten der Signalführung auf die Ausweichschaltung.

Die Fehlererkennungseinheit 20, 26 ist ausgebildet, selbst Defekte des mit ihr direkt verbundenen Prozessors 16, 22 zu erkennen. Defekte am anderen Prozessor 22,16 und am Daten-Bussystem hingegen erkennt die Fehlererkennungseinheit 20, 26 indirekt über diesen mit ihnen direkt verbundenen Prozessor 16, 22.

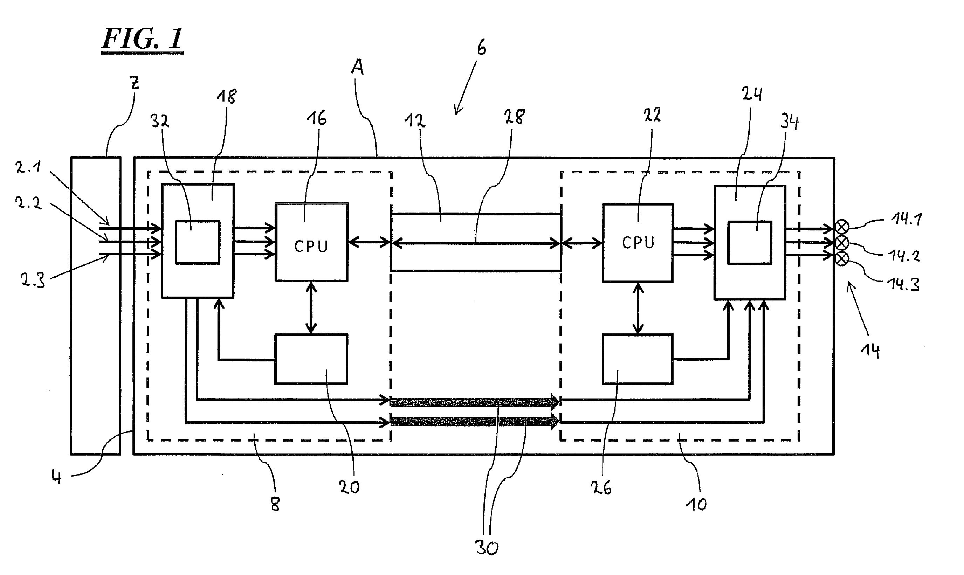

Bei der Ausführungsform nach Fig. 1 verläuft die Ausweichschaltung über parallel zu dem Daten-BUS-System zwischen den Steuereinheiten 8, 10 verlaufende, weitere Leitungen 30. Im regelmäßigen Fall, dass weniger Leitungen 30 als zu führende Signale vorhanden sind, übernehmen Notsignalsteuerungen 32, 34 in den Umschaltern 18, 24 die Verteilung der Signale auf die zur Verfügung stehenden Leitungen 30 bzw. auf die entsprechenden Rückleuchten. Die Leitungen 30 können tote elektrische Leitungen sein, die also nur auf Vorrat vorhanden sind und ansonsten keine Aufgabe im Rahmen der Fahrzeugelektrik haben. Oder die Leitungen 30 können eine anderweitige Funktion im Rahmen der Fahrzeugelektrik haben, und werden bei Bedarf zusätzlich für die Ausweichschaltung genutzt.

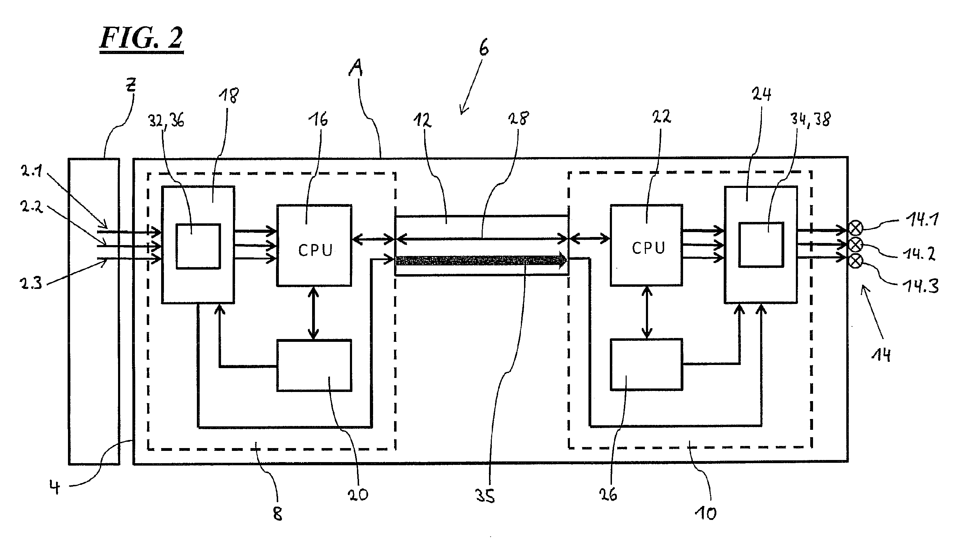

Eine alternative Ausführungsform der erfindungsgemäßen Ausweichschaltung zeigt Fig. 2. Diese entspricht weitgehend der in Fig. 1 gezeigten Ausführungsform, mit der Ausnahme, dass die Signale, anstatt über normale elektrische Kabel 30, über mindestens eine BUS-Leitung 35 des Daten-BUS-Systems 12 geführt werden. Der Signalverlauf im Notbetrieb wird bei dieser Ausweichschaltung also zurück auf den üblichen Signalverlauf bei Normalbetrieb geführt. In den Steuereinheiten 8, 10 verlaufen die Signale bei Notbetrieb von den Umschaltern 18, 24 bis zu dem jeweiligen Ende des Daten-BUS-Systems 12, und damit an den Prozessoren 16, 22 vorbei. Ein Prioritätsregler 32 des ersten Umschalters 18 enthält, um Signale in geeigneter Weise zur Übertragung in mindestens einer funktionsfähigen BUS-Leitung 35 zu kodieren, einen Kodierer 36. Ein Prioritätsregler 34 des zweiten Umschalters 24 enthält entsprechend einen Dekodierer 38.

### Bezugszeichen

- 2.1, 2.2, 2.3: Anschlusskabel
- 4: vordere Bordwand
- 6: Fahrzeugbeleuchtungssystem
- 8: Lichtsteuereinheit
- 10: Leuchtensteuereinheit
- 12: Daten-BUS-System
- 14: Rückleuchteneinheit
- 14.1: Bremsleuchte
- 14.2: Blinkerleuchte
- 14.3: Rücklicht
- 16: erster Prozessor (CPU)
- 18: erster Umschalter
- 20: erste Fehlererkennungseinheit
- 22: zweiter Prozessor (CPU)
- 24: zweiter Umschalter
- 26: zweite Fehlererkennungseinheit
- 28: BUS-Leitung (Normalbetrieb)
- 30: Leitung
- 32, 34: Notsignalsteuerung, Prioritätsregler
- 35: BUS-Leitung (Notbetrieb)
- 36: Kodierer
- 38: Dekodierer

- A: Anhängerfahrzeug
- Z: Zugfahrzeug

## Patentansprüche

1. Fahrzeugbeleuchtungssystem (6) zur Versorgung und Ansteuerung der Fahrzeugrückleuchten, mit einer einen ersten Prozessor (CPU) (16) aufweisenden zentralen Lichtsteuereinheit (8), mindestens einer einen zweiten Prozessor (CPU) (22) aufweisenden, verbraucherseitigen Leuchtensteuereinheit (10), und einem diese beiden Steuereinheiten (16, 22) verbindenden Daten-BUS-System (12), **dadurch gekennzeichnet, dass** das Fahrzeugbeleuchtungssystem eine Ausweichschaltung zur Aufrechterhaltung eines Notbetriebs aufweist, und dass die Ausweichschaltung bei einer Fehlererkennung in dem ersten Prozessor (CPU) (16), in dem zweiten Prozessor (CPU) (22) und/oder in dem Daten-BUS-System (12) schaltbar ist.

2. Fahrzeugbeleuchtungssystem nach Anspruch 1, **dadurch gekennzeichnet, dass** dieses zur Fehlererkennung eine erste Fehlererkennungseinheit (20) in der Lichtsteuereinheit (8) und eine zweite Fehlererkennungseinheit (26) in der Leuchtensteuereinheit (10) umfasst, welche derart ausgestaltet sind, dass durch die Fehlererkennung Fehler in dem ersten Prozessor (CPU) (16), in dem zweiten Prozessor (CPU) (22) und/oder in dem Daten-BUS-System (12) erkennbar und die Ausweichschaltung schaltbar ist.

3. Fahrzeugbeleuchtungssystem nach Anspruch 1 oder 2, **dadurch gekennzeichnet, dass** dieses zur Schaltung eines Notsignalverlaufs der Ausweichschaltung einen ersten Umschalter (18) in der Lichtsteuereinheit (8) und einen zweiten Umschalter (24) in der Leuchtensteuereinheit (10) umfasst.

4. Fahrzeugbeleuchtungssystem nach Anspruch 3, **dadurch gekennzeichnet, dass** zur Übertragung des Notsignals der erste Umschalter (18) mit einem ersten Ende mindestens einer zwischen den Steuereinheiten (8, 10) geführten Leitung (30), und der zweite Umschalter (24) mit einem zweiten Ende der mindestens einen zwischen den Steuereinheiten (8, 10) geführten Leitung (30) verbunden ist.

5. Fahrzeugbeleuchtungssystem nach Anspruch 4, **dadurch gekennzeichnet, dass** die Leitung (30) außerhalb des Notbetriebs eine anderweitige Funktion im Rahmen der Fahrzeugelektrik hat.

6. Fahrzeugbeleuchtungssystem nach Anspruch 3, **dadurch gekennzeichnet, dass** zur Übertragung des Notsignals der erste Umschalter (18) mit einem ersten Ende mindestens einer BUS-Leitung (35) des Daten-BUS-Systems (12), und der zweite Umschalter (24) mit einem zweiten Ende der mindestens einen BUS-Leitung (35) des Daten-BUS-Systems (12) verbunden ist.

7. Fahrzeugbeleuchtungssystem nach einem der Ansprüche 3 bis 6, **dadurch gekennzeichnet, dass** der erste und der zweite Umschalter (18, 24) je eine Notsignalsteuerung (32, 34) umfassen.

8. Fahrzeugbeleuchtungssystem nach Anspruch 7, **dadurch gekennzeichnet, dass** die Notsignalsteuerung (32) des ersten Umschalters (18) einen Kodierer (36) und die Notsignalsteuerung (34) des zweiten Umschalters (24) einen Dekodierer (38) umfasst.
